(19) Europäisches Patentamt
European Patent Office
Office européen des brevets

(11) **EP 2 691 246 B1**

(12) **FASCICULE DE BREVET EUROPEEN**

(45) Date de publication et mention de la délivrance du brevet:
**18.03.2015  Bulletin 2015/12**

(21) Numéro de dépôt: **12711415.5**

(22) Date de dépôt: **02.04.2012**

(51) Int Cl.:
**B60C 13/00** *(2006.01)*   **B29D 30/72** *(2006.01)*

(86) Numéro de dépôt international:
**PCT/EP2012/055946**

(87) Numéro de publication internationale:
**WO 2012/131089 (04.10.2012 Gazette 2012/40)**

(54) **MOTIF DE PNEUMATIQUE A FORT CONTRASTE**

KONTRASTREICHE REIFENSTRUKTUR

HIGH CONTRAST TYRE PATTERN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.03.2011  FR 1152753**

(43) Date de publication de la demande:
**05.02.2014  Bulletin 2014/06**

(73) Titulaires:
• **Compagnie Générale des Etablissements Michelin**
  **63000 Clermont-Ferrand (FR)**
• **MICHELIN Recherche et Technique S.A.**
  **1763 Granges-Paccot (CH)**

(72) Inventeurs:
• **MUHLHOFF, Olivier**
  **F-63040 Clermont-Ferrand Cedex 9 (FR)**
• **PATURLE, Antoine**
  **F-63040 Clermont-Ferrand Cedex 9 (FR)**
• **DESVIGNES, Jean-Claude**
  **F-63040 Clermont-Ferrand Cedex 9 (FR)**

(74) Mandataire: **Demaure, Pierre-Yves**
  **Manufacture Française**
  **des Pneumatiques Michelin**
  **23, place des Carmes - Déchaux**
  **DGD/PI - F35 - Ladoux**
  **63040 Clermont-Ferrand Cedex 9 (FR)**

(56) Documents cités:
EP-A2- 0 751 014    WO-A1-2011/036061
JP-A- 9 086 106     US-A- 5 303 758

## Description

### DOMAINE DE L'INVENTION

La présente invention concerne un pneumatique pour véhicule automobile comportant un motif à fort contraste ainsi qu'un moule pour le moulage et la vulcanisation dudit pneumatique.

### ETAT DE LA TECHNIQUE

Les flancs des pneumatiques présentent une grande quantité de motifs, également appelés marquages. Ces motifs sont destinés d'une part à donner des informations techniques et légales, et d'autre part à permettre aux consommateurs de distinguer l'origine du produit.

Il est constant d'essayer d'améliorer la visibilité et la lisibilité de ces motifs sur les flancs des pneumatiques.

Le document WO2007/045425 décrit un motif à fort contraste comportant une pluralité de brins faisant saillie à partir d'une surface du pneumatique. Par « brin », on entend un élément filiforme dont la hauteur est au moins égale à 2 fois le diamètre d'un disque de même surface que la section moyenne du brin.

L'effet de ces brins est de « piéger » les rayons lumineux incidents qui rencontrent la surface du motif. Ceci permet de donner un aspect plus noir au motif par rapport au reste du flanc du pneumatique. Les brins permettent d'obtenir également un toucher particulièrement agréable, de type « velours ».

Cependant, un motif comportant de tels brins peut être moins résistant à certaines agressions mécaniques que peut subir le pneumatique au cours de son utilisation.

Pour améliorer la résistance mécanique du motif, il a été proposé d'utiliser des lamelles à la place des brins. Les lamelles sont des brins allongés présentant une longueur au moins égale à deux fois leur hauteur. Ces lamelles sont moulées par des stries formées dans un moule destiné à mouler et à vulcaniser le pneumatique comportant le motif. La réalisation de stries dans un moule prend globalement plus de temps que la réalisation de trous pour mouler des brins. En vue d'améliorer le temps de réalisation de ces stries, il a été envisagé de diminuer le nombre de lamelles dans le motif et d'augmenter l'espacement entre ces lamelles. Le motif présente alors des surfaces résiduelles entre les bases des lamelles. Ces surfaces résiduelles présentent un état de surface lisse et brillant comparable à l'état de surface du flanc du pneumatique. Si les surfaces résiduelles ont des dimensions trop importantes, des rayons lumineux incidents rencontrant ces surfaces résiduelles peuvent être directement renvoyés à l'extérieur du motif vers un observateur sans être piégés par le motif En fonction de la direction des rayons lumineux renvoyés par les surfaces résiduelles et de la position de l'observateur vis-à-vis du pneumatique, le motif peut alors présenter des différences de contraste avec le reste du flanc du pneumatique et donc présenter dans certains cas une moins bonne visibilité.

L'invention propose d'appliquer des règles de conception particulières pour la réalisation d'un motif à fort contraste comportant des lamelles, permettant ainsi d'optimiser le temps d'usinage d'un moule moulant ledit motif, tout en conservant une grande qualité de contraste du motif avec le reste de la surface d'un flanc d'un pneumatique et ceci quelle que soit la position de l'observateur vis-à-vis de ce pneumatique.

Le document JP-A-09-86106 montre un pneumatique présentant toutes les caractéristiques du préambule de la revendication 1.

### DEFINITIONS

Par matériau caoutchoutique, on entend un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Par pneumatique, on entend tous les types de bandages élastiques soumis à une pression interne ou non.

Par moule, on entend un ensemble d'éléments séparés qui, par rapprochement relatif, permettent de délimiter un espace de moulage toroïdal.

Par surface de moulage d'un moule, on entend la surface interne du moule délimitant l'espace de moulage toroïdal. Cette surface interne comprend un fond et des parties faisant saillie sur ledit fond en formant des cordons. Le fond de la surface interne est destiné à mouler la surface de roulement du pneumatique et les cordons sont destinés à mouler des rainures dans la bande de roulement.

Par rayon lumineux incident, on entend un rayon lumineux arrivant sur une surface.

Par rayon lumineux réfléchi, on entend un rayon lumineux renvoyé par une surface.

Par direction radiale, on entend toute direction perpendiculaire à l'axe de rotation du pneumatique.

### RESUME DE L'INVENTION

L'invention concerne un pneumatique en matériau caoutchoutique comprenant une surface ayant sur au moins une partie de cette surface un motif comportant une pluralité de lamelles disposées sensiblement parallèlement les unes aux autres, chaque lamelle de la pluralité de lamelles comportant un sommet distant de la surface du pneumatique et une base venue de matière avec ledit pneumatique. Chaque lamelle de la pluralité de lamelles comporte deux parois inclinées s'étendant de part et d'autre du sommet de la lamelle vers la base de ladite lamelle, l'angle d'inclinaison de chacune desdites parois inclinées étant inférieur ou égal en valeur absolue à 25° par rapport à une direction perpendiculaire à la surface du pneumatique. Les bases des lamelles ne sont pas en contact entre elles de sorte que les bases de deux lamelles adjacentes délimitent une surface résiduelle entre lesdites lamelles. La largeur de la surface résiduelle correspondant à une distance entre les bases des deux lamelles adjacentes est inférieure ou égale à la moitié de la hauteur desdites lamelles adjacentes, ladite hauteur étant comprise entre 0,1 mm et 0,8 mm.

Les lamelles ont ainsi une hauteur bien supérieure à la largeur des surfaces résiduelles. Ces lamelles ont alors une grande capacité à dévier les rayons lumineux incidents avant que ceux-ci ne viennent toucher des surfaces résiduelles du motif, et plus particulièrement à dévier les rayons lumineux présentant un angle d'incidence supérieur à 20° avec une direction perpendiculaire à une surface du pneumatique comportant le motif. On limite ainsi la quantité de lumière reçue par les surfaces résiduelles du motif.

A chaque fois qu'un rayon lumineux incident rencontre une lamelle au niveau d'une paroi de cette lamelle, celui-ci est réfléchi par ladite paroi. La direction de réflexion du rayon lumineux dépend de la direction du rayon lumineux incident et de l'angle d'inclinaison de la paroi. Ainsi, en fonction de la direction du rayon lumineux incident et de l'angle d'inclinaison de la paroi, le rayon lumineux peut être renvoyé vers une paroi d'une lamelle adjacente ou le rayon lumineux peut être renvoyé à l'extérieur du motif directement vers un observateur. Dans le premier cas, le rayon lumineux « se perd » dans le motif et il ne sera plus perceptible par l'oeil d'un observateur. Dans le second cas, l'observateur peut percevoir le rayon lumineux et le motif peut apparaître alors comme étant plus clair. L'inclinaison des parois telle qu'elle est définie dans l'invention permet ainsi de garantir qu'une grande partie des rayons lumineux rencontrant une paroi d'une lamelle est renvoyée vers au moins une autre paroi d'une lamelle adjacente.

Grâce à l'invention, on améliore le contraste du motif avec le reste de la surface du flanc du pneumatique et ceci quelle que soit la position de l'observateur vis-à-vis du pneumatique.

Dans une variante de réalisation, la largeur de la surface résiduelle est inférieure ou égale au tiers de la hauteur des lamelles adjacentes.

On améliore ainsi davantage la capacité des lamelles à dévier les rayons lumineux incidents avant que ceux-ci ne viennent toucher des surfaces résiduelles du motif, et plus particulièrement à dévier les rayons lumineux présentant un angle d'incidence supérieur à 10° avec une direction perpendiculaire à la surface du pneumatique comportant le motif.

Dans une variante de réalisation, la rugosité moyenne de la surface résiduelle est comprise entre 5 $\mu$m et 30 $\mu$m.

Avec une telle rugosité, lorsqu'un rayon lumineux incident atteint la surface résiduelle, celui-ci est dévié d'une manière aléatoire et peut être ainsi renvoyé plus facilement vers une paroi d'une lamelle pour se « perdre » dans le motif. Ainsi, dans le cas où un rayon lumineux présente un angle d'incidence proche de 0 °C avec la surface du pneumatique comportant le motif, la probabilité que ce rayon lumineux soit renvoyé directement selon cette direction perpendiculaire est faible. On limite ainsi la capacité de la surface résiduelle à renvoyer directement des rayons lumineux incidents.

Dans une variante de réalisation, le sommet de chaque lamelle a une forme arrondie présentant, selon une vue en coupe, un rayon moyen compris entre 0,005 mm et 0,05 mm.

On améliore ainsi la résistance mécanique du sommet de la lamelle tout en limitant la capacité du sommet à renvoyer directement des rayons lumineux incidents.

Dans une variante de réalisation, le sommet de chaque lamelle comporte une pluralité de crêtes et de creux dans la longueur de ladite lamelle.

Le sommet de la lamelle présente ainsi un aspect irrégulier dans la longueur de la lamelle. On rend alors encore plus arbitraire la réflexion des rayons lumineux incidents par le sommet de la lamelle.

Dans une variante de réalisation, les sommets des lamelles sont prolongés en hauteur par des brins venus de matière avec lesdites lamelles, chaque brin ayant une section moyenne comprise entre 0,003 et 0,06 mm$^2$ et la densité des brins dans le motif est au moins égale à cinq brins par unité de surface exprimée en millimètre carré (mm$^2$).

On associe ainsi de manière avantageuse le toucher particulièrement agréable des brins avec la résistance mécanique des lamelles.

Dans une variante de réalisation, le motif est présent sur un flanc du pneumatique et les lamelles dudit motif sont orientées selon une direction radiale sur ledit flanc.

Avec une telle orientation des lamelles, on s'assure que le motif sera plus résistant à certaines agressions mécaniques, telles que des agressions causées par des frottements avec des trottoirs.

Dans une variante de réalisation, la surface résiduelle est bombée.

On favorise ainsi la réflexion des rayons lumineux incidents vers des parois inclinées des lamelles du motif.

Un autre objet de l'invention concerne un moule comportant des stries pour le moulage de lamelles d'un motif tel que décrit ci-dessus.

BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :

-     la figure 1 représente schématiquement une vue en perspective d'un motif comportant des lamelles conformément à un premier mode de réalisation de l'invention ;

- la figure 2 illustre le mode de calcul de la rugosité moyenne utilisée pour déterminer la rugosité du fond d'une rainure séparant deux lamelles de la figure 1;

- la figure 3 représente schématiquement une vue en perspective d'un motif comportant des lamelles et des brins conformément à un second mode de réalisation de l'invention ;

- la figure 4 représente schématiquement une vue en perspective d'un motif comportant des lamelles conformément à un troisième mode de réalisation de l'invention.

Dans la description qui va suivre, des éléments sensiblement identiques ou similaires seront désignés par des références identiques.

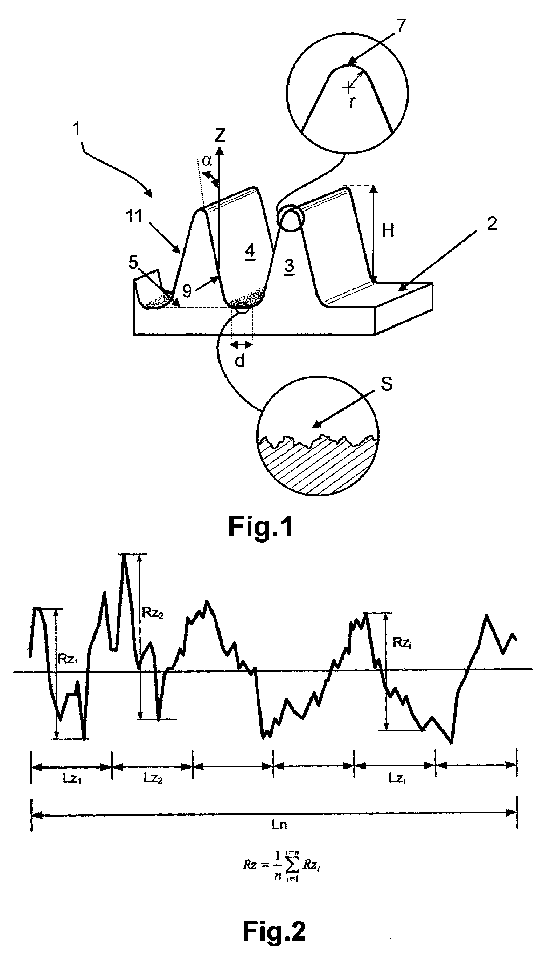

La figure 1 représente schématiquement une vue en perspective d'un motif 1 conformément à l'invention.

Le motif 1 comprend des lamelles 3 séparées par des rainures 4.

Chaque lamelle peut être ici divisée est trois couches : une couche sommet, une couche de base et une couche intermédiaire disposée entre la couche sommet et la couche de base.

La couche sommet est délimitée par une surface courbe de rayon moyen r compris entre 0,005 mm et 0,05 mm. Le sommet 7 de la lamelle correspond à l'ensemble des points les plus hauts de la couche sommet pris dans la longueur de la lamelle.

La couche intermédiaire est délimitée par deux parois inclinées rectilignes qui s'étendent dans la longueur de la lamelle. L'angle d'inclinaison $\alpha$ des parois inclinées est ici inférieur ou égal en valeur absolue à 25° par rapport à une direction Z perpendiculaire à la surface 2 du pneumatique comportant le motif 1.

La couche de base est délimitée par deux surfaces curvilignes assurant la jonction entre les parois inclinées de la couche intermédiaire et une surface résiduelle S présente entre deux lamelles adjacentes. La surface résiduelle est ici globalement plane et est située au même niveau que la surface 2 du pneumatique. En variante, la surface résiduelle peut être plus haute ou plus basse que cette surface 2.

La base 5 de la lamelle correspond à la partie basse de la couche de base, c'est-à-dire à l'ensemble des points de la couche de base situés au même niveau que la surface résiduelle S. La largeur de la base 5 de la lamelle est ici inférieure ou égale à 0,5 mm.

Il est possible de déterminer une hauteur H de la lamelle. Cette hauteur H correspond à la distance entre le sommet 7 de la lamelle et la base 5 de la lamelle et est comprise ici entre 0,1 mm et 0,8 mm.

La surface résiduelle entre les deux lamelles adjacentes constitue le fond de la rainure 4. La largeur de cette surface résiduelle, c'est-à-dire la distance d entre les bases des deux lamelles adjacentes est ici inférieure ou égale à la moitié de la hauteur H des lamelles.

En variante, la distance d est inférieure ou égale au tiers de la hauteur des lamelles adjacentes.

On notera que dans le cas où les lamelles adjacentes ont des hauteurs différentes, on sélectionne la hauteur la plus faible pour déterminer la distance d.

Les lamelles sont ici disposées sensiblement parallèlement les unes aux autres. Par «lamelles parallèles», on entend qu'il peut exister un faible angle entre deux lamelles du motif, par exemple un angle compris entre 0 et 5°.

Avec cet agencement de lamelles 3, tout rayon lumineux incident venant en contact avec une paroi inclinée va être réfléchi vers une autre paroi inclinée du motif et va ainsi « se perdre » dans le motif. En effet, à chaque fois qu'un rayon lumineux entre en contact avec une paroi, il perd en intensité. On estime qu'après deux contacts avec des parois du motif, le rayon lumineux n'est plus perceptible par l'oeil d'un observateur. Ainsi par « se perdre dans le motif», on entend que le rayon lumineux peut être renvoyé vers l'extérieur du motif mais que son intensité lumineuse sera si faible qu'il ne pourra pas être perçu par l'oeil d'un observateur. De cette manière, on favorise l'obtention d'un motif noir et mat contrastant avec la surface 2 du pneumatique qui est lisse et brillante.

La surface résiduelle a ici un état de surface irrégulier conformément au médaillon situé dans la partie inférieure de la **figure 1.** Plus particulièrement, la surface résiduelle a une rugosité moyenne Rz comprise entre 5 $\mu$m et 30 $\mu$m. De cette manière, une grande partie des rayons lumineux incidents arrivant sur la surface résiduelle sera renvoyée vers une paroi inclinée d'une lamelle.

Pour déterminer la rugosité moyenne Rz de la surface résiduelle, on découpe une longueur donnée de cette surface dite longueur d'évaluation Ln, en n longueurs de bases Lz de longueurs identiques, comme cela est illustré à la **figure 2**. Sur chacune des longueurs de base, on détermine une hauteur individuelle de profil Rzi qui est la somme de la plus grande des hauteurs de saillie et de la plus grande des profondeurs de creux du profil de la surface résiduelle à l'intérieur de la longueur de base Lzi. La hauteur moyenne Rz est la moyenne arithmétique des valeurs individuelles Rzi sur l'ensemble des longueurs de base considérées (norme DIN 4768 ; 1990), et s'exprime par la formule suivante :

$$Rz = \frac{1}{n}\sum\nolimits_{i=1}^{i=n} Rz_i$$

Dans une variante de réalisation, il est possible que les parois des lamelles et/ou les sommets des lamelles présentent également une rugosité Rz comprise entre 5 μm et 30 μm.

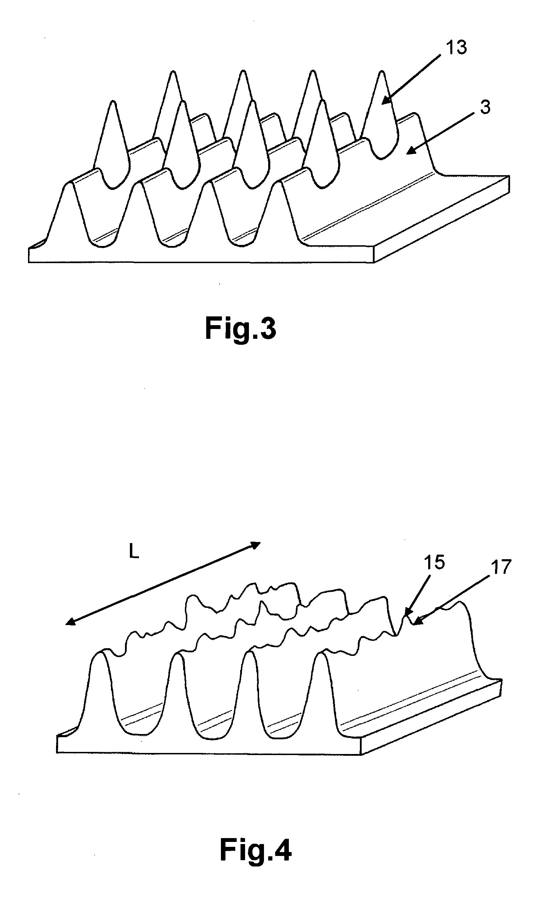

**La figure 3** présente une variante de réalisation dans laquelle le motif 1 comprend des lamelles 3 et des brins 13. Les brins 13 présentent une section qui diminue en allant de la base du brin vers l'extrémité du brin.

Plus particulièrement, dans le mode de réalisation de la **figure 3**, les brins 13 sont venus de matière avec les sommets des lamelles 3, c'est-à-dire que les brins prolongent en hauteur le motif. De cette manière, on améliore la capacité d'absorption de la lumière par le motif par rapport à un motif ne comportant que des brins comme dans l'art antérieur, car les brins du motif de la figure 3 sont surélevés par rapport à la surface du pneumatique.

Les brins ont ici une section moyenne comprise entre 0,003 et 0,06 mm$^2$ et leur hauteur est comprise également entre 0,1 mm et 0,8 mm.

La **figure 4** présente une autre variante de réalisation, dans laquelle le sommet de chaque lamelle comporte une pluralité de crêtes 15 et de creux 17 dans la longueur L de la lamelle. Le sommet de la lamelle présente ainsi un aspect irrégulier. Dans le cas particulier présenté dans cette figure 4, la hauteur de la lamelle correspond ici à une moyenne des hauteurs des crêtes et des creux déterminés dans la longueur de la lamelle.

Le motif de l'invention peut être formé sur le flanc d'un pneumatique. Dans ce cas, il est préférable d'orienter les lamelles selon une direction radiale de sorte à limiter les effets des frottements lorsque le pneumatique entre en contact avec le bord d'un trottoir. Dans une variante de réalisation, il est possible de former le motif sur la bande de roulement du pneumatique.

L'invention concerne également un moule pour le moulage et la vulcanisation d'un pneumatique comportant un motif conforme à l'invention. Le moule comprend sur une partie de sa surface interne une pluralité de cavités ayant la forme de stries. Ces stries permettent de mouler les lamelles du motif. De la même manière, le moule peut comporter une pluralité de trous pour mouler les brins de la **figure 3**.

Les stries sont réalisées ici à l'aide d'un laser par passes successives, chaque passe ayant pour effet d'éroder le métal du moule sur une surface et une profondeur donnée. A titre d'exemple, on utilise un laser à impulsions de la marque IPG ayant une puissance de 50 W pour former les stries dans le moule.

L'invention n'est pas limitée aux exemples décrits et représentés et diverses modifications peuvent y être apportées sans sortir de son cadre, tel que défini par les revendications ci-jointes.

En particulier, la figure 1 présente une surface résiduelle S globalement plane. En variante, il est possible de prévoir des surfaces résiduelles bombées favorisant la réflexion des rayons lumineux incidents vers des parois inclinées des lamelles du motif.

## Revendications

1. Pneumatique en matériau caoutchoutique comprenant une surface (2) ayant sur au moins une partie de cette surface un motif (1) comportant une pluralité de lamelles (3) disposées sensiblement parallèlement les unes aux autres, chaque lamelle de la pluralité de lamelles comportant un sommet (7) distant de la surface du pneumatique et une base (5) venue de matière avec ledit pneumatique **caractérisé en ce que** chaque lamelle de la pluralité de lamelles comporte deux parois inclinées (9, 11) s'étendant de part et d'autre du sommet (7) de la lamelle vers la base (5) de ladite lamelle, l'angle d'inclinaison (α) de chacune desdites parois inclinées étant inférieur ou égal en valeur absolue à 25° par rapport à une direction (Z) perpendiculaire à la surface (2) du pneumatique et **en ce que** les bases des lamelles ne sont pas en contact entre elles de sorte que les bases de deux lamelles adjacentes délimitent une surface résiduelle (S) entre lesdites lamelles et **en ce que** la largeur de la surface résiduelle correspondant à une distance (d) entre les bases des deux lamelles adjacentes est inférieure ou égale à la moitié de la hauteur desdites lamelles adjacentes, ladite hauteur étant comprise entre 0,1 mm et 0,8 mm et **en ce que** la rugosité moyenne de la surface résiduelle est comprise entre 5 μm et 30 μm.

2. Pneumatique selon la revendication 1 **caractérisé en ce que** la largeur de la surface résiduelle est inférieure ou égale au tiers de la hauteur des lamelles adjacentes.

3. Pneumatique selon l'une quelconque des revendications 1 à 2 **caractérisé en ce que** le sommet de chaque lamelle a une forme arrondie présentant, selon une vue en coupe, un rayon moyen compris entre 0,005 mm et 0,05 mm.

4. Pneumatique selon l'une quelconque des revendications 1 à 3 **caractérisé en ce que** le sommet de chaque lamelle comporte une pluralité de crêtes et de creux dans la longueur de ladite lamelle.

5. Pneumatique selon l'une quelconque des revendications 1 à 4 **caractérisé en ce que** le motif est prolongé en hauteur par des brins venus de matière avec lesdites lamelles, chaque brin ayant une section moyenne comprise entre 0,003 et 0,06 mm$^2$ et **en ce que** la densité des brins dans le motif est au moins égale à cinq brins par unité de surface exprimée en millimètre carré (mm$^2$).

6. Pneumatique selon l'une quelconque des revendications 1 à 5 **caractérisé en ce que** le motif est présent sur un flanc du pneumatique et **en ce que** les lamelles dudit motif sont orientées selon une direction radiale sur ledit flanc.

7.  Pneumatique selon l'une quelconque des revendications 1 à 6 **caractérisé en ce que** la surface résiduelle (S) est bombée.

**Patentansprüche**

1.  Reifen aus Kautschukmaterial, welcher eine Oberfläche (2) aufweist, mit einer Struktur (1) auf wenigstens einem Teil dieser Oberfläche, die eine Vielzahl von Lamellen (3) aufweist, die im Wesentlichen parallel zueinander angeordnet sind, wobei jede Lamelle der Vielzahl von Lamellen einen Scheitel (7), der von der Oberfläche des Reifens entfernt ist, und einen Fuß (5), der stoffschlüssig mit dem Reifen verbunden ist, aufweist, **dadurch gekennzeichnet, dass** jede Lamelle der Vielzahl von Lamellen zwei geneigte Wände (9, 11) aufweist, die sich beiderseits des Scheitels (7) der Lamelle zu dem Fuß (5) der Lamelle hin erstrecken, wobei der Neigungswinkel ($\alpha$) jeder der geneigten Wände in Bezug auf eine zu der Oberfläche (2) des Reifens senkrechte Richtung (Z) dem absoluten Betrag nach kleiner oder gleich 25° ist, und dadurch, dass die Füße der Lamellen nicht miteinander in Kontakt stehen, derart, dass die Füße von zwei benachbarten Lamellen eine Restfläche (S) zwischen diesen Lamellen begrenzen, und dadurch, dass die Breite der Restfläche, die einem Abstand (d) zwischen den Füßen der zwei benachbarten Lamellen entspricht, kleiner oder gleich der Hälfte der Höhe dieser benachbarten Lamellen ist, wobei diese Höhe zwischen 0,1 mm und 0,8 mm liegt, und dadurch, dass die mittlere Rauigkeit der Restfläche zwischen 5 $\mu$m und 30 $\mu$m liegt.

2.  Reifen nach Anspruch 1, **dadurch gekennzeichnet, dass** die Breite der Restfläche kleiner oder gleich einem Drittel der Höhe der benachbarten Lamellen ist.

3.  Reifen nach einem der Ansprüche 1 bis 2, **dadurch gekennzeichnet, dass** der Scheitel jeder Lamelle eine abgerundete Form aufweist, die in einer Schnittansicht einen mittleren Radius zwischen 0,005 mm und 0,05 mm aufweist.

4.  Reifen nach einem der Ansprüche 1 bis 3, **dadurch gekennzeichnet, dass** der Scheitel jeder Lamelle entlang der Länge der Lamelle mehrere Kämme und Senken aufweist.

5.  Reifen nach einem der Ansprüche 1 bis 4, **dadurch gekennzeichnet, dass** die Struktur in der Höhe durch Fäden verlängert wird, die mit den Lamellen stoffschlüssig verbunden sind, wobei jeder Faden einen mittleren Querschnitt zwischen 0,003 und 0,06 mm² aufweist, und dadurch, dass die Dichte der Fäden in der Struktur mindestens fünf Fäden pro Flächeneinheit, ausgedrückt in Quadratmillimetern (mm²), beträgt.

6.  Reifen nach einem der Ansprüche 1 bis 5, **dadurch gekennzeichnet, dass** die Struktur auf einer Seitenwand des Reifens vorhanden ist, und dadurch, dass die Lamellen der Struktur entlang einer radialen Richtung auf der Seitenwand ausgerichtet sind.

7.  Reifen nach einem der Ansprüche 1 bis 6, **dadurch gekennzeichnet, dass** die Restfläche (S) gewölbt ist.

**Claims**

1.  Rubber tyre comprising a surface (2) having, over at least a portion of this surface, a pattern (1) comprising a plurality of bars (3) placed substantially parallel with one another, each bar of the plurality of bars comprising a tip (7) distant from the surface of the tyre and a base (5) made materially integral with the said tyre **characterized in that** each bar of the plurality of bars comprises two inclined walls (9, 11) extending on either side of the tip (7) of the bar towards the base (5) of the said bar, the angle of inclination ($\alpha$) of each of the said inclined walls being less than or equal in absolute value to 25° relative to a direction (Z) perpendicular to the surface (2) of the tyre **and in that** the bases of the bars are not in contact with one another so that the bases of two adjacent bars delimit a residual surface (S) between the said bars **and in that** the width of the residual surface corresponding to a distance (d) between the bases of the two adjacent bars is less than or equal to half the height of the said adjacent bars, the said height being between 0.1 mm and 0.8 mm **and in that** the mean roughness of the residual surface is between 5 $\mu$m and 30 $\mu$m.

2.  Tyre according to Claim 1, **characterized in that** the width of the residual surface is less than or equal to a third of the height of the adjacent bars.

3.  Tyre according to either one of Claims 1 and 2, **characterized in that** the tip of each bar has a rounded shape having, according to a sectional view, a medium radius of between 0.005 mm and 0.05 mm.

4.  Tyre according to any one of Claims 1 to 3, **characterized in that** the tip of each bar comprises a plurality of peaks and hollows in the length of the said bar.

5.  Tyre according to any one of Claims 1 to 4, **characterized in that** the pattern is extended in height by strands made materially integral with the said bars, each strand having an average section of between 0.003 and 0.06 mm$^2$ and **in that** the density of the strands in the pattern is at least equal to five strands per unit of surface area expressed in square millimetres (mm$^2$).

6. Tyre according to any one of Claims 1 to 5, **characterized in that** the pattern is present on a sidewall of the tyre and **in that** the bars of the said pattern are oriented in a radial direction on the said sidewall.

7. Tyre according to any one of Claims 1 to 6, **characterized in that** the residual surface (S) is domed.

**Fig.1**

$$Rz = \frac{1}{n}\sum_{i=1}^{i=n} Rz_i$$

**Fig.2**

EP 2 691 246 B1

**Fig.3**

**Fig.4**

9

## RÉFÉRENCES CITÉES DANS LA DESCRIPTION

**Documents brevets cités dans la description**

- WO 2007045425 A
- JP 9086106 A